# EUROPEAN PATENT SPECIFICATION

(11) **EP 0 420 041 B1**
(45) Date of publication and mention of the grant of the patent: **21.07.1993**
(21) Application number: 90118099.2
(22) Date of filing: 20.09.1990
(51) Int. Cl.: G01P 3/44, G01P 3/487

(54) **Elastomer covered phonic wheel for detection of the speed of a rotating element**
Elastomerüberzogenes Polrad zur Erfassung der Geschwindigkeit eines drehbaren Elements
Codeur roulant couvert d'un élastomère pour la détection de la vitesse d'un élément rotatif

(30) Priority: 28.09.1989 IT 6780789
(43) Date of publication of application: 03.04.1991
(73) Proprietor: RIV-SKF OFFICINE DI VILLAR PEROSA S.p.A, I-10123 Torino (IT)
(72) Inventor: Vignotto, Angelo, I-10134 Torino (IT)
(74) Representative: Lotti, Giorgio

(56) References cited:
- EP-A- 0 213 732
- EP-A- 0 306 850
- GB-A- 2 204 647

## Description

The invention refers to a phonic wheel for the detection of the speed of a rotating element, covered with elastomer, and particularly for wheel hub bearings of vehicles.

Devices for avoiding blockage of brake equipments, have been in use for several years; these devices need a sensor for detecting the revolving movement into an electric signal which is sent to operating means.

The sensor detects the mechanic signal from a wheel known as phonic wheel.

As the phonic wheel is usually fitted directly on the outer external race of the wheel hub, the following drawbacks may take place
- as the phonic wheel is made of metal and is fitted directly on the outer race of the wheel hub, this metal against metal restraint might cause a strain for the outer race of the bearing and consequently a damage for the whole wheel hub;
- in case of crashes the phonic wheel may suffer from axial shiftings on the outer race of the bearing, as there are not any elastic elements interposed, this may cause damages in the operation of the device for detecting the revolving speed of the wheel;
- following temperature variations, strains may appear in the system, causing a loss of the interference between the sensor and the wheel itself;
- damage of the phonic wheel and/or of the sensor in case of a crash between said elements having their metallic facing surfaces very near each other;
- corrosion of the phonic wheel that can be attacked by external agents during vehicle operation, so that the whole device becomes useless.

A phonic wheel in the form of a magnetic ring is known from EP-A-213 732. This reference discloses a magnetic ring made of synthetic resin in which magnetic material is dispersed so as to give the ring an alternating magnetic property around a circumference thereof. The magnetic ring is reinforced by a reinforcing ring member which is made of synthetic resin material.

Another phonic wheel, in the form of a seal screen, is disclosed in GB-2 204 647. The screen has the shape of a disk with circumferentially disposed cavities that can be filled with rubber.

Neither of these references disclose an elastomer covering capable of fixing a toothed metal phonic wheel on the bearing avoiding strains thereon or preventing the same from damage or shifting in case of crashes or temperature variations.

A purpose of the invention is to eliminate or anyway to cut down radically the above mentioned inconvenients by realizing the phonic wheel fully or partially immerged in elastomeric material to cover it and protect it.

For these and other purposes that will be better understood later on the invetion proposes to realize a phonic wheel consisting of a toothed metallic ring, designed for gauging the speed of a revolving member such as the outer race of a wheel hub bearing , characterised in that the cross section of the metallic ring is substantially "C" shaped; the phonic wheel being provided with a pair of tongues, coaxially disposed with respect to the rotation axis of the bearing, of which one is toothed and faces a fixed sensor radially; said tongues being radially spaced so that the toothed tongue is farther from said rotation axis with respect to the other tongue; the phonic wheel being covered with an elastomeric material on the non-toothed tongue, appointed to the assembly of the phonic wheel on the bearing, while the toothed tongue is covered with a film of said elastomeric material on its side facing the sensor.

The phonic wheel according to the invention is now going to be described referring to the annexed drawings wherein:
- fig. 1: is an axial cross section of a wheel hub bearing on which a first embodiment of the phonic wheel according to the invention is mounted;
- fig. 2: is a magnified view of a detail of the outer race of the bearing on which the phonic wheel according to the invention is mounted, shown here embodied slightly differently than in fig. 1.

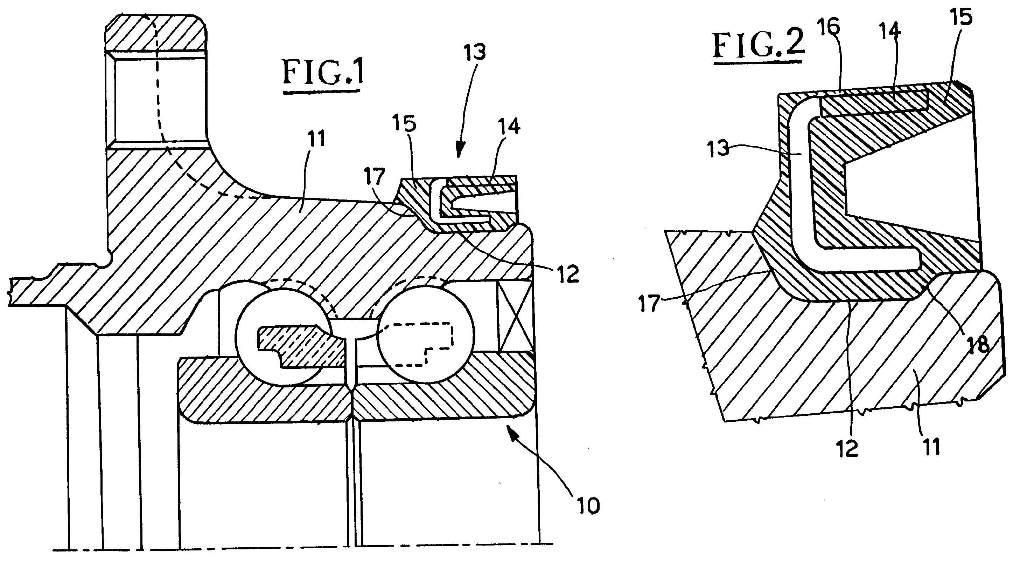

As shown in fig. 1, a traditional bearing 10 for wheel hubs has an external rotating race 11; on its extremity a circumferential groove 12 is obtained and it carries the phonic wheel 13. This wheel has a substantially "C" shaped cross section in which the superior tongue 14 is the one that realizes the traditional toothing or magnetic surface that is detected by a sensor (not shown) that faces radially said tongue 14.

As it can be observed in both figures, ring 13 is completely covered by the elastomer or rubber material.

It may be better observed in fig. 2 that nearby the tongue 14 facing the sensor, the portion of elastomer or rubber material is extremely thin and forms a film 16 to avoid that the signals, that phonic wheel 13 transmits to the sensor through its own tongue 14, may be distorted.

By means of this kind of covering, the first advantage obtained is a total guarantee against the corrosion of ring 13; besides ring 13 does not run the risk of being damaged by external crashes, expecially accidental crashes against the sensor because the rubber or elastomer material 15 is able to damp completely these crashes.

As can be observed in the figures, the groove 12, obtained inside rotating ring 11 has countersunk lateral edges 17 and 18 that allow an effective restraint of elements 13-15 onto ring 11, preventing detaching of said elements 13-15; moreover the edges of elastic element 15 in both senses against lateral edges 17 and 18 always guarantee the correct positioning of wheel 13 in its own seat.

As the restraint is made by means of elastic element 15 and no more by fitting directly the phonic wheel 13 on ring 11, no more strains, that could damage the whole bearing, occur.

## Claims

1. A phonic wheel (13) consisting of a toothed metallic ring, designed for gauging the speed of a revolving member such as the outer race (11) of a wheel hub bearing (10), characterised in that the cross section of the metallic ring is substantially "C" shaped; the phonic wheel (13) being provided with a pair of tongues, coaxially disposed with respect to the rotation axis of the bearing, of which one is toothed (14) and faces a fixed sensor radially; said tongues being radially spaced so that the toothed tongue (14) is farther from said rotation axis with respect to the other tongue; the phonic wheel (13) being covered with an elastomeric material (15) on the non-toothed tongue, appointed to the assembly of the phonic wheel on the bearing, while the toothed tongue (14) is covered with a film (16) of said elastomeric material on its side facing the sensor.

## Patentansprüche

1. Phonisches Rad (13) bestehend aus einem gezahnten metallischen Ring, der zur Messung der Geschwindigkeit eines rotierenden Teiles wie beispielsweise dem Außenring (11) eines Radnabenlagers (10) gestaltet ist,
dadurch gekennzeichnet,
daß der Querschnitt des metallischen Ringes im wesentlich C-förmig gestaltet ist; dabei ist das phonische Rad (13) mit einem Paar von Zungen versehen, welche bezüglich der Rotationsachse der Lagers koaxial angeordnet sind, von denen eine gezahnt (14) ist und einem feststehenden Sensor radial gegenübersteht; dabei besitzen die Zungen einen radialen Abstand in der Weise, daß die gezahnte Zunge (14) einen größeren Abstand zur Rotationsachse besitzt als die andere Zunge; dabei ist das phonische Rad (13) mit einem elastomeren Material (15) auf der nichtgezahnten Zunge abgedeckt, was dazu bestimmt ist, das phonische Rad auf dem Lager zu montieren, während die gezahnte Zunge (14) auf ihrer dem Sensor zugewandten Seite mit einem Film (16) des elastomeren Materials bedeckt ist.

## Revendications

1. Roue phonique (13), constituée d'un anneau métallique denté, destinée à détecter la vitesse d'un élément tournant, tel que la bague de roulement extérieure (11) d'un roulement de moyeu de roue (10),
caractérisée en ce que la section de l'anneau métallique est sensiblement en forme de "C"; la roue phonique (13) étant pourvue d'une paire de languettes, disposées coaxialement par rapport à l'axe de rotation du roulement, dont l'une (14) est dentée et fait radialement face à un capteur fixe ; lesdites languettes étant radialement espacées de telle sorte que la languette dentée (14) soit plus éloignée dudit axe de rotation que l'autre languette ; la roue phonique (13) étant recouverte d'un matériau élastomère (15) sur la languette non dentée, affectée au montage de la roue phonique sur le roulement, tandis que la languette dentée (14) est recouverte d'un film (16) dudit matériau élastomère du côté faisant face au capteur.
